Europäisches Patentamt

European Patent Office

Office européen des brevets

(19)

(11) Publication number: **0 142 970**
**A2**

(12) # EUROPEAN PATENT APPLICATION

(21) Application number: **84307788.4**

(22) Date of filing: **09.11.84**

(51) Int. Cl.⁴: **G 02 B 6/38**

(30) Priority: **17.11.83 US 552610**

(43) Date of publication of application:
**29.05.85 Bulletin 85/22**

(84) Designated Contracting States:
**IT**

(71) Applicant: **AMERICAN TELEPHONE AND TELEGRAPH COMPANY**
**550 Madison Avenue**
**New York, NY 10022(US)**

(72) Inventor: **McEowen, James Royce**
**11 W. Parkway Place**
**Holmdel New Jersey 07733(US)**

(74) Representative: **Johnston, Kenneth Graham et al,**
**Western Electric Company Limited 5 Mornington Road**
**Woodford Green Essex, IG8 OTU(GB)**

(54) Electrical/lightwave connection arrangement.

(57) A combined electrical lightwave connection arrangement provides electrical connections via conventional contact blades and ground post and a lightwave connection via a lightwave transmission line carried within the ground post.

EP 0 142 970 A2

./...

Croydon Printing Company Ltd.

FIG. 1

# ELECTRICAL/LIGHTWAVE CONNECTION ARRANGEMENT

## Background of the Invention

The present invention relates to a combined electrical/lightwave connection arrangement.

Connections between electronic equipment and data communication channels are typically made by way of a data set, or modem. Although generally satisfactory from the functional standpoint, the modem has proved to be less than ideal in other respects. For example, a modem often brings with it a tangle of cables, connectors, transformers, interface boxes, etc. In addition, it may be quite bulky. As a result, there is often no satisfactory place to locate the modem where it is out of sight and out of the way.

Moreover, installing a new piece of data processing equipment, for example, or moving an old one to a new location, can be frustrating, time consuming and/or expensive. For example, the modem interface interconnections at a new location may be different from those at the old, and the required new connectors or adapters never seem to be on hand. In addition, moving the modem may require the services of a telephone company, or other vendor's, installer. Not only may there be a charge associated with this service, but also a delay until the work can be scheduled and performed.

In order to ameliorate the foregoing problems, as well as to provide enhanced data communication capabilities, such facilities as the local area network have evolved. Here, the equipment/data channel interface may be little more than a receptacle in the wall which places the terminal equipment in communication, via a (typically) passive communications path, with computers and other equipment within, say, a building or building complex.

A particularly advantageous way of implementing a local area network is with fiber optic, or lightwave, technology. A fiber optic cable is smaller than an electrical cable of comparable data capacity, and is not subject to electromagnetic interference, such as might originate from a building's electric power distribution system, and/or electrical equipment within it. At present, there is very little commercially available terminal equipment having a data input-output interface that is lightwave, rather than electrical. As such facilities as lightwave local area networks begin to proliferate, however, such terminal equipment will undoubtedly become commonplace.

In conjunction with this development, and as a step toward simplifying the installation and interconnection of optically-communicating terminal equipment, it will be advantageous to have a way of connecting such equipment to both the lightwave data communication path and the AC power system concurrently. In this way, the equipment--be it data processing equipment, alarms, or other "intelligent" equipment--will be ready to communicate immediately upon being "plugged in." At the same time, any such combined electrical/lightwave connection arrangement should be compatible with existing standard electrical connection arrangements so that (a) the same receptacles can be used to provide AC power to non-optically-communicating terminal equipment as well as to other electrical devices and (b) optically-communicating terminals can be plugged into standard non-optically-communicating receptacles when optical communications is not desired or available.

Summary of the Invention

The present invention is directed to such a combined electrical/lightwave connection arrangement. In particular, as is conventional, the male, or plug, portion includes a pair of blades for carrying electrical current, and a ground post. In accordance with the invention, however, a lightwave transmission line--illustrating an optical fiber cable--is carried within the ground post and has a free end that terminates substantially at the free end of the ground post.

The female, or receptacle, portion of the connection arrangement includes conventional electrical contacts which are contacted when the plug is inserted in the receptacle. Further in accordance with the invention, the receptacle also includes a female lightwave connector body which carries a second lightwave transmission line. The latter is disposed within the receptacle such that, when the plug is inserted in the receptacle, the free end of the first lightwave transmission line is optically mated to a free end of the second lightwave transmission line.

Brief Description of the Drawing

FIG. 1 is a partially exploded view of a plug and receptacle embodying the principles of the invention;

FIG. 2 is a partial cross-sectional view of the plug and receptacle disengaged; and

FIG. 3 is a partial cross-sectional view of the plug and receptacle engaged.

Detailed Description

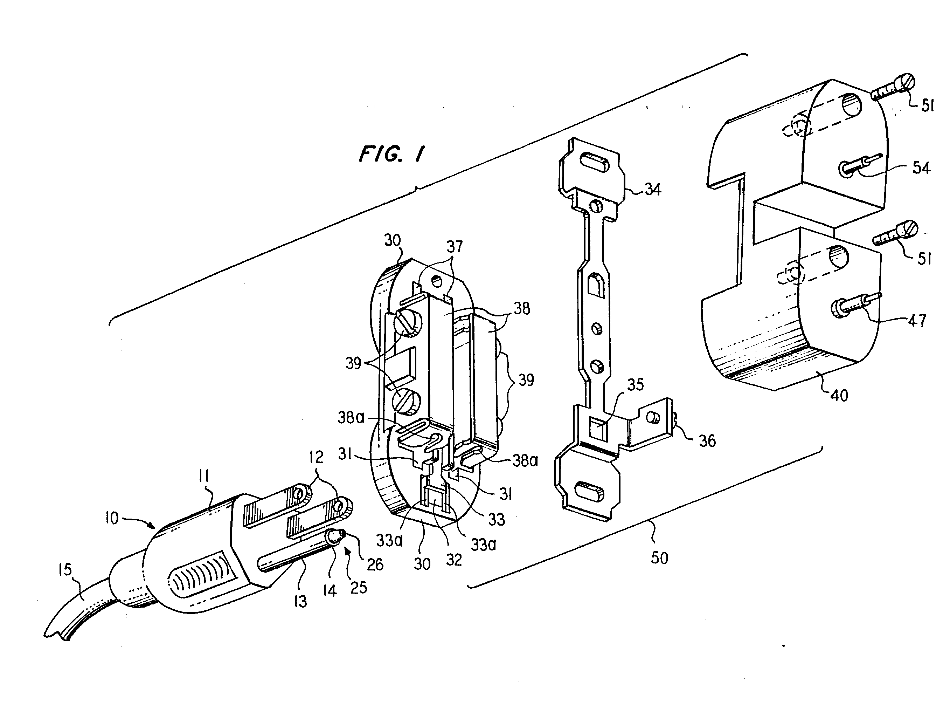

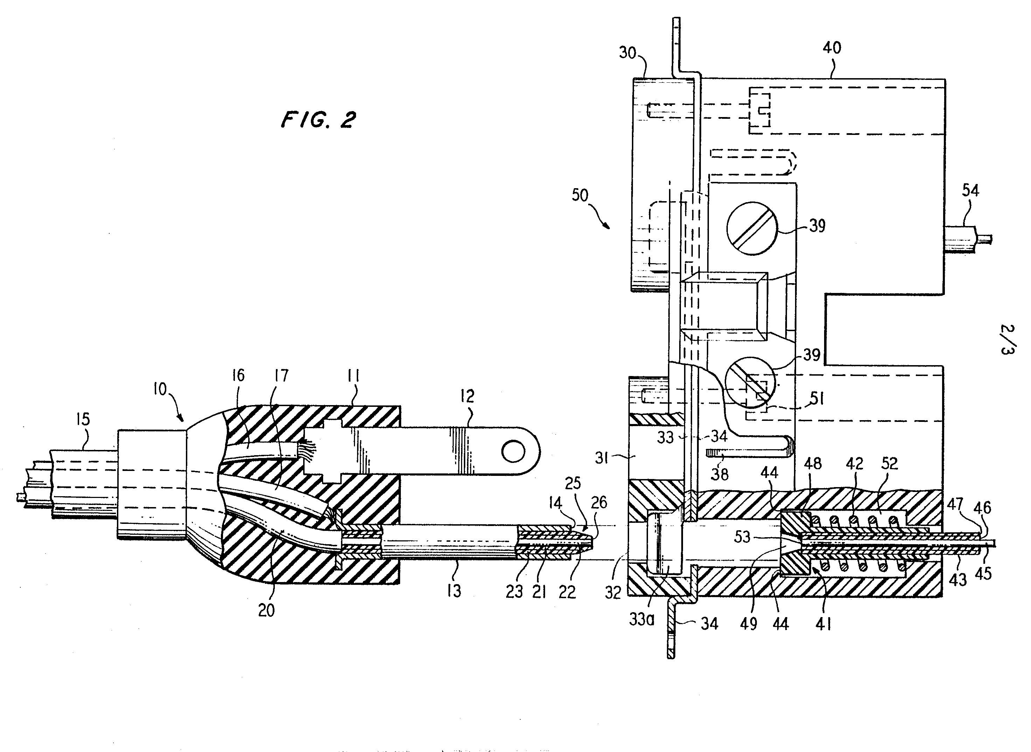

In the present illustrative embodiment, as seen in FIGS. 1 and 2, the male portion, or plug, 10 of the electrical/lightwave connection arrangement comprises a molded housing 11 attached to a cable 15. Carried within cable 15 are a pair of insulated copper wires 16 (only one of which is visible in the drawing) which are adapted to carry 117 VAC electricity. Each of these wires is connected within housing 11 to a respective one of two electrically conductive, metal blades 12, which extend in parallel relation from housing 11. As is conventional in the USA, the width of each of blades 12 is within the range 6.1-6.6 mm and the spacing between them is within the range 12.6-12.8 mm on center. Also carried within cable 15 is an insulated copper ground wire 17, which is connected within housing 11 to an electrically conductive, metal ground post 13. The latter extends from housing 11 to a free end 14. The distance from ground post 13 to each of blades 12 is nominally within the range 13.3-13.6 mm.

The female portion, or receptacle, 50 of the connection arrangement comprises a front piece 30, a ground bar 34 and back piece 40, which are held together by a pair of screws 51. Formed in front piece 30 is a pair of slots 31 adapted to receive blades 12 and a D-shaped aperture adapted to receive ground post 13. Also formed in front piece 30 is a second pair of slots 37 and a second D-shaped aperture (not visible), which are adapted to receive the blades and ground post, respectively, of a second plug (not shown).

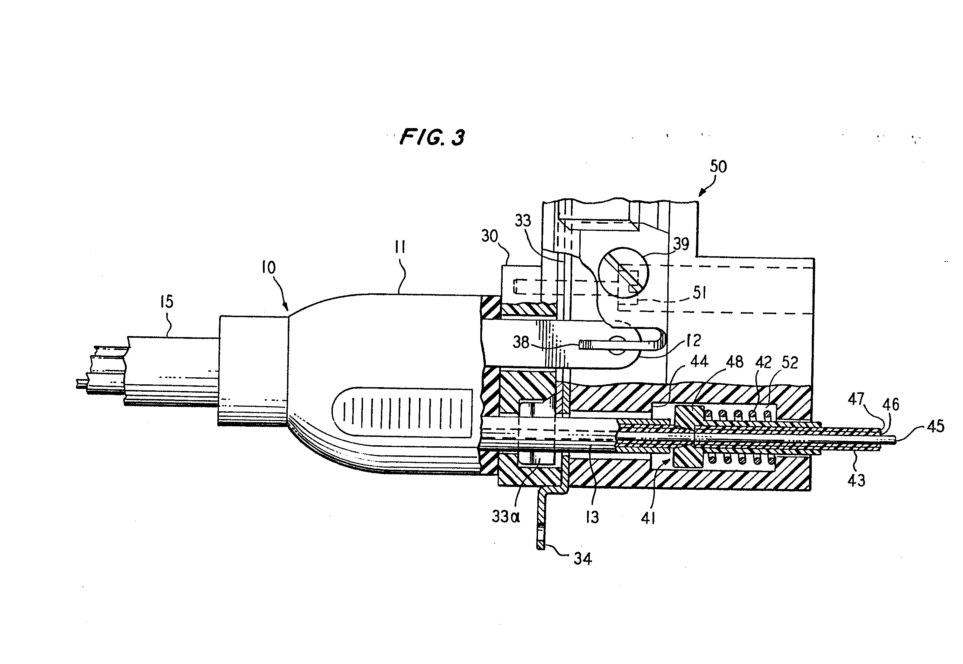

Disposed on the rear of front piece 30 are a pair of electrically conductive, metal contacts 38 to which the wires (not shown) supplying 117 VAC potential can be connected via screws 39. When, as shown in FIG. 3, plug 12 is inserted into receptacle 50, each one of blades 12 engages a slot 38a in a respective one of contacts 38, thereby supplying 117 VAC potential to wires 16 within cable 15.

In addition, connection of a ground wire (not shown) is made to ground bar 34 via screw 36. Ground bar 34, in turn is held in intimate contact with ground bus 33, the latter being disposed on the rear of front piece 30 between contacts 38. At each end of ground bus 33 is a set of fingers positioned on opposite sides of an associated one of the aforementioned D-shaped apertures. In particular, the fingers 33a of one of those sets are positioned on respective sides of aperture 32. When plug 10 is inserted in receptacle 50, ground post 13 contacts those fingers (and passes through hole 35 in ground bar 34). An electrical path for ground potential comprising screw 36, ground bar 34, ground bus 33 and ground post 13 is thus provided to ground wire 17 within cable 15.

In addition to wires 16 and 17, cable 15 also carries a first lightwave transmission line--illustratively an optical fiber cable--20, which is comprised of a optical fiber 22 surrounded by epoxy layer 21. The latter, in turn, is sheathed in a plastic jacket 23. In accordance with the invention, a terminal portion of cable 20 is disposed within, and is thus substantially surrounded by, ground post 13. In particular, ground post 13 is formed so as to define a channel extending from housing 11 to free end 14. In this embodiment, more particularly, post 13 is formed in the shape of a tubular pin, i.e., a hollow right circular cylinder, having an outside dimension within the range of 4.7-4.8 mm. The free end, or tip, 25 of cable 20 is substantially coextensive with free end 14 of post 13. Specifically, jacket 23 terminates right at free end 14, while the optical fiber and surrounding epoxy extend out a little beyond it. Tip 25 is machined into a frustum shape terminating in a precision machined mating surface 26 adapted to couple light signals into and out of cable 20, the latter signals, in particular, being coupled out of the cable in a direction substantially parallel to post 13.

Further in accordance with the invention, receptacle 50 includes within back piece 40 a female lightwave connector body 41, the latter being slidably disposed within a chamber 52 and urged toward aperture 32 by a spring 42. Lightwave connector body 41 carries a second lightwave transmission line--illustratively an optical fiber cable 43--which is comprised of an optical fiber 45 surrounded by epoxy layer 46. The latter, in turn, is sheathed in a plastic jacket 47. Formed in the head 48 of lightwave connector body 41 is a frustum-shaped passage 49 adapted to mate with tip 25 of lightwave cable 20. Cable 43 has a free end terminating in a precision machined mating surface 53 adapted to couple lightwave signals into and out of cable 43. Passage 49 is open to, and terminates at, mating surface 53.

When plug 10 is not inserted in receptacle 50, a spring 42 urges lightwave connector body 41 against stops 44 formed within rear piece 40. As plug 10 is inserted into receptacle 50, and even before it is fully inserted, tip 25 mates into passage 49. Since passage 49 terminates at mating surface 53, the latter is thereby brought into intimate contact with mating surface 26. A path for light signals is thus completed between optical fibers 22 and 45. As insertion of plug 10 continues, tip 25 pushes lightwave receptacle 41 to the right. Spring 42 applies a force on lightwave receptacle 41 which tends to keep the latter pushed to the left, thereby maintaining intimate contact between surfaces 26 and 53, and ensuring a good lightwave connection, when the plug is fully inserted, as shown in FIG. 3.

Although not explicitly shown or discussed herein, it will be appreciated that rear portion 40 illustratively includes a second female lightwave connector body which is substantially identical to female lightwave connector body 41 which has an associated optical fiber cable 54. That second lightwave connector body is positioned within rear piece 40 so as to receive the tip of the ground post of a plug similar to plug 10 when the plug is inserted into the upper portion of receptacle 50.

The lightwave coupling arrangement shown and described herein is a relatively simple one and, with such an arrangement, there may be some small, e.g., several db, coupling loss due, for example, to fiber misalignment and/or fiber end separation. It is anticipated, however, that where the data rates over fibers 22 and 45 are relatively low, e.g., up to $10^6$ bits/sec, and/or the distances that the lightwave signals must travel before being repeated or otherwise terminated are relatively short, e.g., meters or tens of meters, such losses will not be of particular consequence. For more critical applications, where such losses may be significant, it may be desired to employ a more complex arrangement for mating and/or locking the optical fibers together.

It will thus be appreciated that the foregoing merely illustrates the principles of the invention and numerous variations are possible. Thus, by way of example but not limitation, the mating portions of tip 25 and lightwave connector body 41 may take on various alternative shapes; the male and female frustums may be reversed to provide greater protection to the end of the fiber disposed in the plug; fiber 20 could be terminated with a separate male lightwave connector body rather than simply a machined tip; the mating end of post 13 could be so formed and/or shaped as to play a greater role in assuring the alignment of fibers 22 and 45 and in such, as well as other, embodiments, the terminating face of fiber 22 might be flush with end of post 13; the structure of lightwave connector body 41 and/or the way it is disposed within rear piece 40 may be different than that illustratively shown herein; and post 13 and lightwave connector body 41 may each be arranged to carry more than one optical fiber cable and/or to carry optical fiber cables having more than one optical fiber therein.

Additionally, post 13 may be a cylinder having a cross-section that is other than circular or in fact may have an open, rather than closed cross-section. For example, post 13 may comprise a U-shaped blade rather than a tubular pin, with the lightwave transmission line being disposed within the channel defined by the "U" shape of the blade.

More generally, it is contemplated that the invention can be used in conjunction with various alternative electrical connection arrangements having, for example, various different numbers of blades and various different blade and ground post sizes, shapes and orientations adapted for various voltage and current ratings. Such alternative arrangements may include, but are not limited to, those disclosed in the American National Standard ANSI/UL 498--1980 entitled "Standard for Attachment Plugs and Receptacles," 10th ed., February 16, 1983, which standard is available from Underwriters Laboratories, Inc., Northbrook, Illinois.

Moreover, if an electrical grounding function is not needed, the electrical connections to post 13, i.e.,

wire 17, and to ground bar 34 may be omitted and post 13 need not be electrically conductive.

Claims

1. A connector arrangement comprising

a plug housing,

a pair of electrically conductive spaced apart conductive members extending from the body,

first and second electrical wires connected to respective ones of the members,

a post extending from the housing to a free end, the post being spaced apart from, and substantially parallel to, the blades, and

a lightwave transmission line disposed within the post and having a free end adapted to couple light signals into and out of the transmission line.

2. The connector in accordance with claim 1, CHARACTERIZED IN THAT

the post is electrically conductive and the arrangement further comprises a third electrical wire connected to the post.

3. The connector in accordance with any of claims 1 and 2, CHARACTERIZED IN THAT

the free end of the transmission line is substantially coextensive with the free end of the post.

4. The connector in accordance with claim 1, CHARACTERIZED IN THAT

the free end of the transmission line is adapted to couple light signals out of the fiber in a direction that is substantially parallel to the post.

5. The connector in accordance with claim 1, CHARACTERIZED IN THAT

the free end of the transmission line terminates in a mating surface which extends beyond the free end of the post.

6. The connector in accordance with claim 5, CHARACTERIZED IN THAT

the shape of the free end of the transmission is a frustum terminating in the mating surface.

7.   The connector in accordance with claim 6,
CHARACTERIZED IN THAT
the light signals are coupled out of the mating
surface in a direction that is substantially parallel to
the post.

8.   The connector in accordance with claim 1,
CHARACTERIZED IN THAT
the post is a hollow cylinder and the
terminating portion is disposed within the hollow cylinder.

9.   A female connector arrangement for use in
conjunction with the connector arrangement, in accordance
with any of claims 1-8,
CHARACTERIZED IN THAT
the female connector arrangement comprises,
a receptacle body in which are formed a pair of
slots adapted to receive the conductive members and in
which is further formed an aperture adapted to receive the
post,
first and second electrically conductive means
disposed within the body for contacting the conductive
members when they are inserted into the slots,
a second lightwave transmission line terminating
within the body at a free end, the second transmission line
free end being adapted to couple light signals into and out
of the second transmission line, and
means disposed within the body for optically
mating the free ends of the first and second transmission
lines when the post is inserted into the aperture.

FIG. 1

1/3

0142970

FIG. 2

FIG. 3

3/3

0142970